# EUROPEAN PATENT APPLICATION

(11) **EP 4 650 598 A1**
(43) Date of publication of application: **19.11.2025**
(21) Application number: 24176488.5
(22) Date of filing: 17.05.2024
(51) Int. Cl.: F03D 17/00

(54) **METHOD OF PERFORMING DRIVETRAIN OSCILLATION MONITORING**

(71) Applicant: Siemens Gamesa Renewable Energy A/S, 7330 Brande (DK)
(72) Inventor: Frouzakis, Nikolaos, 2450 Copenhagen (DK); Tibaldi, Carlo, 2300 København (DK)
(74) Representative: SGRE-Association

(57) **Abstract**

The invention describes a method of performing oscillation monitoring in a drivetrain (10), which method comprises the steps of obtaining sensor outputs (D) from a plurality of sensors (S) arranged to measure the rotational speed of each of a number of drivetrain components (11, 12, 13, 14); screening the sensor outputs (D) to detect an erroneous sensor output (D); and, under exclusion of any erroneous sensor outputs (D), processing one or more of the remaining sensor outputs (D) to identify oscillation in a drivetrain component (11, 12, 13, 14). The invention further describes a ... drivetrain oscillation monitor (2) comprising a screening stage (20, 21) adapted to detect and exclude erroneous sensor output (D) ; and a wind turbine (1) comprising a plurality of sensors (S) arranged to measure the rotational speed of a drivetrain component (11, 12, 13, 14) and an instance of such a drivetrain oscillation monitor (2).

## Description

### Background

During operation of a large machine such as a wind turbine, it is important to monitor the behaviour of various components in order to be able to recognise a potential problem and to take the necessary precautions. For example, rotor blade oscillation within a certain range can be regarded as acceptable, while oscillations outside of that range can be an indication of a structural fault. If such oscillations are observed, the wind turbine may be shut down for inspection of the rotor blades. Tower oscillations can also be monitored in order to identify unfavourably large oscillation amplitudes and to take remedial action.

Simply stated, the drivetrain of a wind turbine comprises the aerodynamic rotor (rotor blades and hub), the generator, and a shaft connecting the aerodynamic rotor and the generator. In a direct-drive wind turbine, the next stage of the drivetrain is the generator rotor. In an indirect-drive wind turbine, the drivetrain comprises a low-speed shaft, a gearbox with its high-speed output shaft, and the generator rotor. Regardless of configuration, any stage of a drivetrain will generally exhibit some degree of oscillation during operation. Oscillations within a certain range are essentially unavoidable and can be regarded as acceptable, while oscillations outside of that range can be an indication of a fault. Unfavourably large oscillations at recurring intervals can ultimately lead to excessive loading and fatigue damage to the drivetrain and also to the rotor blades. When the drivetrain is subject to extreme loading, the correspondingly large oscillations may cause immediate damage to the drivetrain.

To avoid costs associated with damage resulting from drivetrain oscillations, it is known to deploy a monitoring arrangement which can comprise several sensors, arranged for example to measure a rotational speed of the drivetrain. Each sensor can be tuned to cover a specific portion of a relevant frequency range, for example 1 - 10 Hz. The sensors are placed to monitor rotating parts that turn at the same rate, and can be placed at any suitable positions. For example, in a direct-drive wind turbine, one sensor can monitor rotation of the hub, another sensor can monitor rotation of a rotor blade in the rotor plane, another sensor can be placed to monitor rotation of the generator rotor, etc. If any of the sensors reports an oscillation amplitude that exceeds a certain threshold over a predetermined short time interval, the wind turbine can be shut down as a precautionary measure.

Generally, such a monitoring arrangement receives data from the various sensors and performs signal processing on the data to distinguish between "acceptable" oscillations and "problematic" oscillations. However, in a situation in which a sensor delivers erroneous data for whatever reason, the received data is processed as usual by the monitoring arrangement, which may then arrive at an erroneous interpretation of the momentary situation. For example, a sensor may become disconnected. As a result, a "constant signal" can be read at the corresponding input to the processing stage so that, from the point of view of the monitoring arrangement, that sensor is not reporting any problematic oscillations. Another type of undetected sensor fault may arise when the sensor appears to report oscillations, but with incorrect amplitudes. In such situations, the monitoring arrangement cannot reliably protect the wind turbine, which is now vulnerable to damage from problematic but undetected oscillations.

It is therefore an object of the invention to overcome the problems outlined above.

This object is achieved by the claimed method of performing oscillation monitoring in a drivetrain, and by the claimed drivetrain oscillation monitor.

### Description

According to the invention, the method of performing oscillation monitoring in a drivetrain comprises the steps of obtaining sensor outputs from a plurality of sensors arranged to measure the rotational speed of each of a number of drivetrain components; screening the sensor outputs to detect an erroneous sensor output; and, under exclusion of any erroneous sensor outputs, processing one or more of the remaining sensor outputs to identify oscillation in a drivetrain component.

An advantage of the inventive method is that it avoids any risk of corrupting or falsifying the processes of detecting oscillations from analysis of the sensor data. This is because the method ensures that only data from a correctly operating speed sensor will be accepted for use in the oscillation detection and evaluation stages.

According to the invention, the drivetrain oscillation monitor comprises a means of obtaining outputs of a plurality of sensors, each sensor adapted to provide a speed measurement signal for a rotating drivetrain component; a processing module adapted to identify oscillation in a drivetrain component on the basis of a speed measurement signal; and a screening stage adapted to detect an erroneous speed measurement signals and to exclude any such erroneous speed measurement signals from use in the processing module.

The invention ensures essentially complete reliability of the drivetrain oscillation monitor, so that the outcome of a subsequent stage - in which the sensor speed signals are processed to identify problematic oscillations - can be assumed to be correct. For example, an "all clear" output of the inventive drivetrain oscillation monitor can be assumed to be correct, and the wind turbine controller need not take any precautionary measures to prevent damage to the drivetrain.

The screening and processing stages of the inventive drivetrain oscillation monitor can be completely or partially realised as software modules running on a processor of a control unit of the machine in which the drivetrain is installed, for example a processor of a wind turbine controller. A realisation largely in the form of software modules can have the advantage that applications already installed on an existing system can be updated, with relatively little effort, to install and run the inventive method.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the drivetrain is part of a wind turbine, and that the drivetrain oscillation monitor (or simply "monitoring arrangement" in the following) is set up to detect oscillations in any of the drivetrain's rotating components when the wind turbine is operating. To this end, the monitoring arrangement may comprise an oscillation detection stage and an oscillation evaluation stage as will be known to the skilled person.

The expressions "speed sensor" and "sensor" as used in the context of a monitoring arrangement shall be understood to be synonyms and may be used interchangeably herein. A speed sensor used by the inventive drivetrain oscillation monitor can be any suitable sensor, for example an inductive sensor, an accelerometer, a rotary encoder, a Hall-effect sensor, etc. Sensor data may be provided in various ways, depending on the sensor type. In the following, it may be assumed that a speed sensor reports the rotational speed of a drivetrain component in the form of a digital value, for example a 16-bit value for the rpm (revolutions per minute).

In a particularly preferred embodiment of the invention, a speed sensor output is deemed erroneous by the screening stage when a degree of similarity between that sensor output and the remaining sensor outputs is less than a predetermined threshold. The degree of similarity can be established in a number of ways. Preferably, each sensor output is compared to every other sensor output. For example, the degree of similarity can be expressed as a moving correlation, a moving standard deviation, etc. In a preferred embodiment of the invention, for each individual sensor output, the degree of similarity is determined by computing the moving standard deviation of that sensor output; computing the collective moving standard deviation of the remaining sensor outputs; and comparing the predetermined threshold to the difference between the individual moving standard deviation and the collective moving standard deviation. In a particularly preferred embodiment of the invention, the degree of similarity can be expressed as a combination of two or more of the quantities mentioned above. In a further preferred embodiment of the invention, the monitoring arrangement can also check that a sensor output is not flat or "frozen". A sensor with "frozen" output is regarded as erroneous.

At least for this stage of the monitoring arrangement, if the various speed sensors generate outputs that are encoded differently (using different units and/or a different number of bits), format conversion may be performed to convert speed sensor outputs as appropriate into a common format.

The results of this test can be used to clearly indicate the status of each sensor output. For example, for a sensor output that passes the test of similarity, a corresponding status flag is "set" to indicate that the sensor output is valid; for any sensor output that fails this test (i.e. its individual moving standard deviation is too different from the collective moving standard deviation), a corresponding status flag is cleared to indicate that the sensor output is invalid or erroneous. In the following, when referring to a status flag, the term "set" shall be understood to mean "flagged as healthy" e.g. by giving the relevant data bit a value of "1"; similarly the term "cleared" or "reset" shall be understood to mean "flagged as erroneous", e.g. by giving the relevant data bit a value of "0".

The screening stage of the inventive method preferably includes a filtering stage to ensure that any erroneous sensor output, e.g. any sensor output with a "0" status flag, is excluded from the subsequent processing stages, i.e. the data processing steps to detect and evaluate oscillations will only be performed on non-erroneous sensor output.

Any sensor flagged as erroneous by the screening stage can continue to be monitored, i.e. its sensor output is assessed as described above to detect whether, at some later stage, the sensor resumes correct behaviour, in which case that sensor can once again be flagged as healthy.

In a prior art monitoring arrangement for a direct-drive wind turbine, an inductive sensor positioned to measure the generator rotational speed may be the "most preferred" sensor, i.e. oscillation analysis and evaluation is done primarily using this sensor. It is for this reason that the prior art type of monitoring arrangement is prone to error, because it relies on the sensor delivering correct data at all times and cannot identify a situation in which this is not the case.

In a particularly preferred embodiment of the invention, the screening stage allows for such a sensor hierarchy, by selecting - from the set of non-erroneous sensor outputs - the sensor output corresponding to the currently highest level in the hierarchy. As long as the "most preferred" sensor is healthy, e.g. its status flag is "set", it can be used for the oscillation detection and evaluation steps. Should this sensor output become invalid, it will be excluded, and the sensor output corresponding to next level in the hierarchy is chosen instead. In a worst-case scenario, all sensor outputs are invalid, and in this case the inventive monitoring arrangement will issue an alarm, so that the wind turbine controller can respond, for example by initiating shutdown of the wind turbine.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows the drivetrain of a direct-drive wind turbine;
Figures 2 and 3 show exemplary rpm curves generated by the speed sensors of Figure 1;
Figure 4 is a block diagram to illustrate an exemplary embodiment of the inventive drivetrain oscillation monitor;
Figure 5 is a flowchart to illustrate steps of the inventive method;
Figure 6 shows exemplary rpm curves generated by the speed sensors of Figure 1;
Figure 7 is a block diagram of a prior art drivetrain oscillation monitor;
Figure 8 illustrates a problem known from the prior art drivetrain oscillation monitor of Figure 7.

In the diagrams, like numbers refer to like objects throughout. Objects in the diagrams are not necessarily drawn to scale.

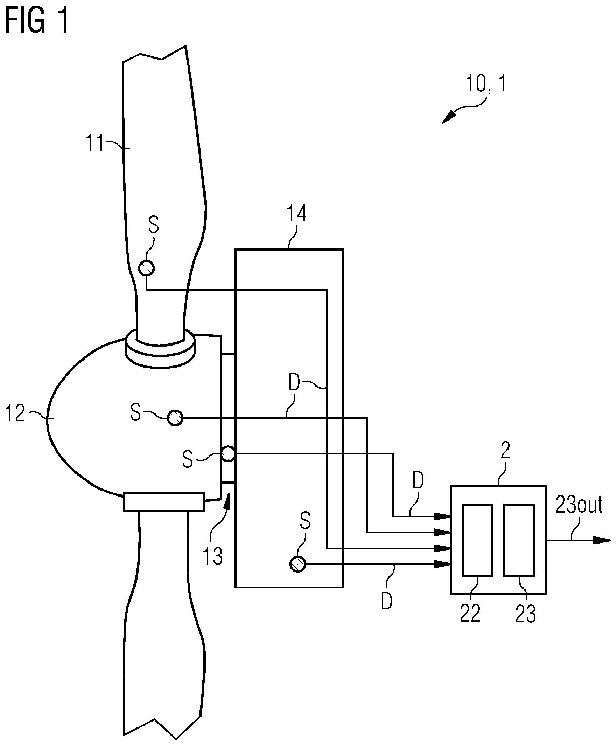

Figure 1 shows the drivetrain 10 of a direct-drive wind turbine 1. The drivetrain 10 comprises the aerodynamic rotor (rotor blades 11 and hub 12), the rotary part 13 of the main bearing, and the generator rotor 14. During operation of the wind turbine 1, each of these components 11, 12, 13, 14 can be monitored as it rotates, since it is important to be able to detect problematic oscillations in any rotating component of the drivetrain 10.

To this end, the wind turbine 1 is equipped with a monitoring arrangement 2, which comprises a means of obtaining sensor output D from several speed sensors S, each placed to measure the rotational speed of a drivetrain component (this exemplary wind turbine deploys four speed sensors). The monitoring arrangement 2 includes an oscillation detection stage 22 configured to detect oscillation in the drivetrain 10 and an oscillation evaluation stage 23 which is configured to evaluate the severity of the detected oscillation 220. These stages 22, 23 can deploy signal processing techniques which will be familiar to the skilled person. If the oscillation evaluation stage 23 reports the presence of problematic oscillation, an alarm 23out is issued, and the wind turbine controller can then take suitable preventative measures such as shutting down the wind turbine 1.

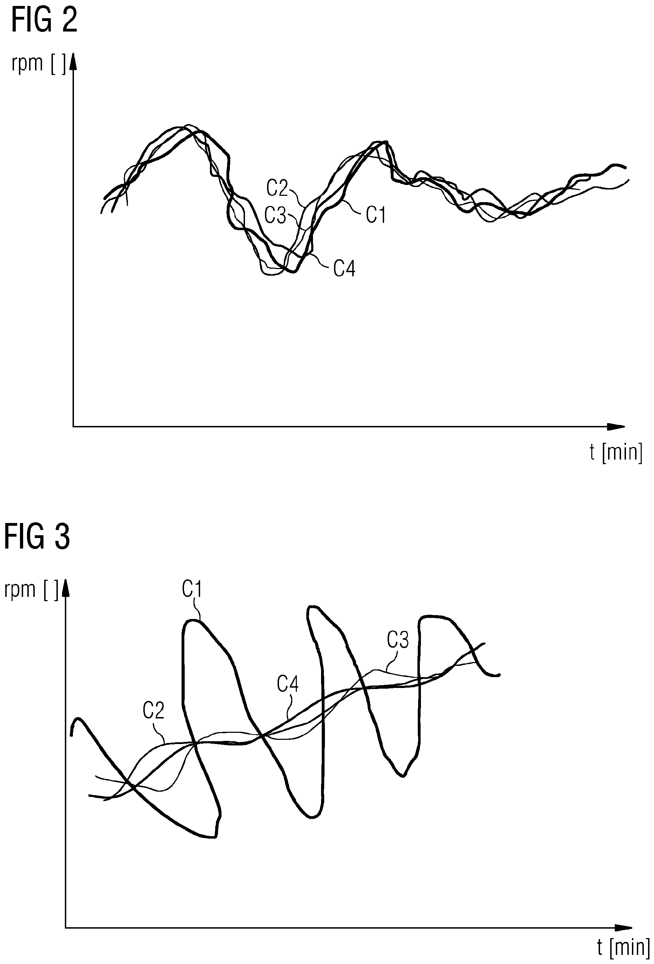

Exemplary rpm curves C1 - C4 generated by the sensors S during operation of the wind turbine of Figure 1 are shown in Figure 2. The monitors S are all reporting similar rpm values, so that the curves C1 - C4 shown in the diagram are also similar.

A set of curves C1 - C4 is shown in Figure 3 for the case in which one of the sensors is faulty. In this case, three sensors are reporting similar rpm values C2, C3, C4 while the other sensor is reporting data C1 that is highly dissimilar. This might be the case if that sensor has suffered a fault, causing it to report falsified measurements C1. In a prior art drivetrain oscillation monitor, the data delivered by such an erroneous sensor is presumed accurate and is processed in the usual manner, which can lead to an erroneous assessment of the severity of oscillation in a drivetrain component.

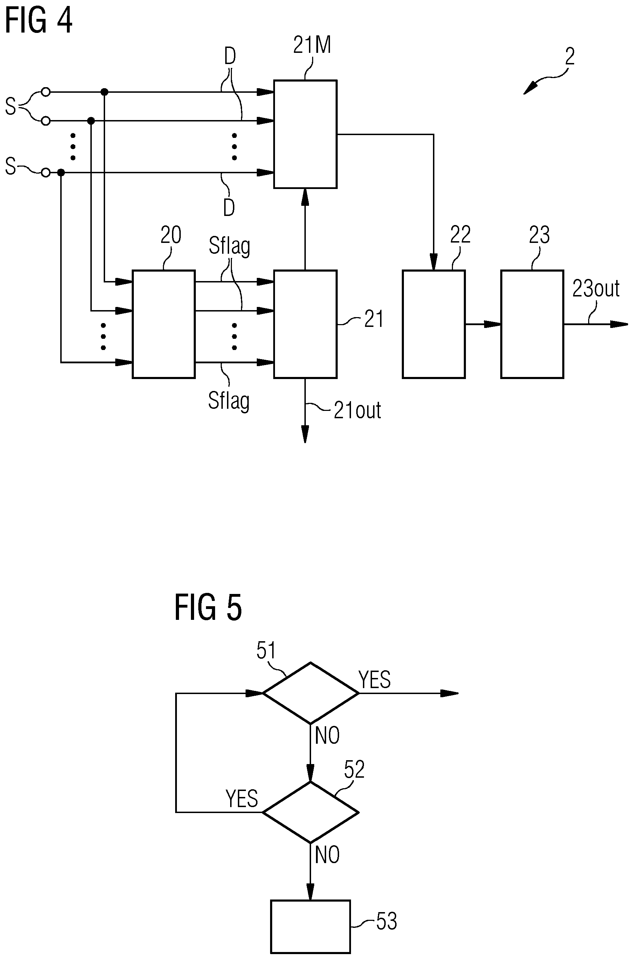

Figure 4 shows an exemplary embodiment of the inventive drivetrain oscillation monitor 2. As explained in Figure 1 above, the monitoring arrangement 2 has a means of obtaining sensor output from several speed sensors S, each placed to measure the rotational speed of a component in the drivetrain, as well as an oscillation detection stage 22 configured to detect oscillation in the drivetrain 10 and an oscillation evaluation stage 23 configured to evaluate the severity of any oscillation.

However, the inventive monitoring arrangement 2 can also detect a situation in which a sensor S is not delivering "credible" data. To this end, the monitoring arrangement 2 comprises a sensor status evaluation or "screening" stage 20 in which the signal quality of each sensor S is evaluated. This can be done by comparing the data delivered by each sensor to the data delivered by the other sensors.

The sensor status evaluation stage 20 outputs a sensor status Sflag for each sensor S. The sensor status Sflag can be a single bit or flag which is "set" (e.g. "1") if the corresponding sensor is deemed functional, and which is cleared (e.g. "0") if that sensor is deemed faulty.

The sensor status can be used in a number of ways. For example, if any sensor S is deemed faulty, its data can be ignored, and the monitoring arrangement 2 can evaluate drivetrain oscillations only on the basis of data delivered by one or more of the functional sensors.

However, as explained above, some rotation sensors are more relevant than others for the purpose of drivetrain oscillation monitoring, and the oscillation detection stage 22 may perform its computations using data from only one "preferred" sensor. In this exemplary embodiment of the invention, the monitoring arrangement 2 assesses the sensor status flags Sflag according to a predetermined sequence in a sensor selection stage 21. This stage commences with the highest-order sensor S (for example an inductive sensor placed to measure the generator rotor rpm in the wind turbine 1 of Figure 1) and checks its sensor status flag Sflag. If this flag Sflag is "set", the oscillation detection stage 22 can continue to evaluate data from that highest-order sensor. If the flag Sflag is cleared because the highest-order sensor is deemed faulty, the oscillation detection stage 22 proceeds to the next sensor in the hierarchy and checks its sensor status flag. If that flag is "set", the oscillation detection stage 22 will evaluate data from the corresponding sensor, otherwise the oscillation detection stage 22 proceeds to the next sensor in the hierarchy, etc. Here, routing data from a particular sensor to the oscillation detection stage 22 is done using suitable logic, such as a multiplexer 21M included in the sensor selection stage 21.

In a worst-case scenario, none of the sensors S are deemed functional, in which case the sensor selection stage 21 issues an error report 21out, which can form the basis for a decision to initiate shutdown of the wind turbine 1.

This procedure is illustrated in the flowchart of Figure 5. Starting with the highest-order sensor, the sensor status flag is queried in a first step 51. If the query result is affirmative, the corresponding sensor data is approved for used by the oscillation detection stage 22. If the query result is negative, the next step 52 is to select the next sensor in the hierarchy. If there is another sensor in the list, the procedure resumes at step 51 with that next-order sensor. If there are no more "healthy" speed sensors, an error (for example error report 21out) is reported in a final step 53.

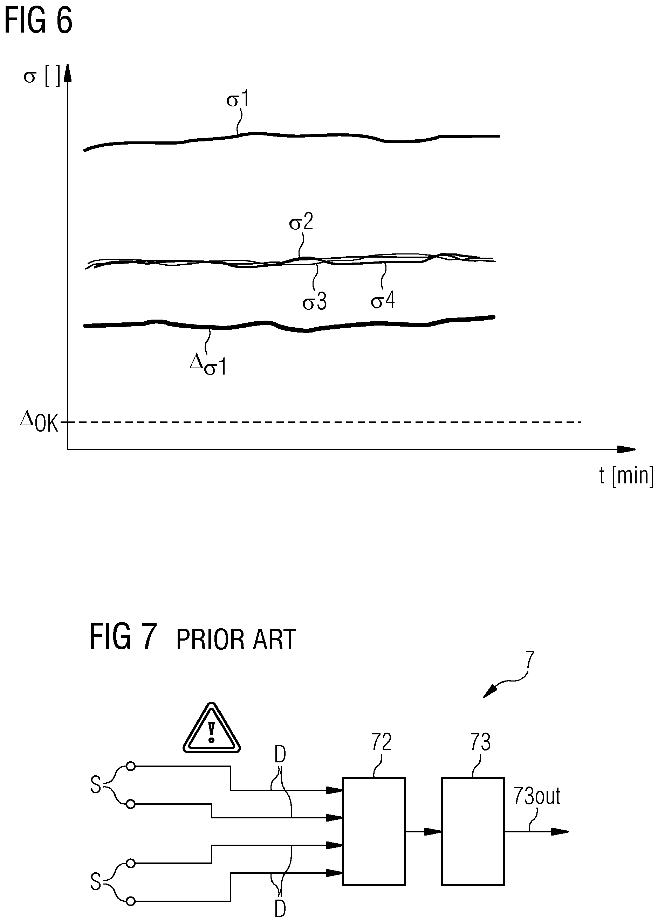

Figure 6 illustrates the manner in which the data of Figure 3 may be interpreted using the inventive approach. The diagram shows four curves σ1, σ2, σ3, σ4, each representing the moving standard deviation of the corresponding sensor data (rpm curves) C1, C2, C3, C4 of Figure 3. The moving standard deviation of each sensor is compared to the moving standard deviation of the other sensors. The diagram indicates the degree of similarity Δ_{σ1} between the moving standard deviation σ1 of a first curve C1 and the moving standard deviations σ2, σ3, σ4 of the other curves C2, C3, C4. This check is successful in detecting a faulty sensor, since the moving standard deviations are dissimilar, i.e. the difference between the moving standard deviation σ1 of the faulty sensor C1, compared to the moving standard deviations σ2, σ3, σ4 of the other sensors C2, C3, C4, clearly falls below a predetermined threshold Δ_{OK}.

By assessing the degree of similarity between the rpm curves in this way, the monitoring arrangement 2 is able to identify the faulty sensor C1 and to prevent its data D from being used in the oscillation detection and evaluation stages 22, 23. Only data D from "healthy" sensors S will be used. By excluding erroneous data in this manner, the invention ensures reliability of the monitoring arrangement 2, i.e. the absence of an alarm at its output 23out means that none of the "healthy" sensors are reporting data that would indicate problematic oscillations in the drivetrain 10, and the wind turbine controller can assume that this information is accurate.

This is in contrast with a prior art monitoring arrangement 7 as illustrated in Figure 7. Here, the monitoring arrangement 7 deploys several sensors S, and detection of possible problematic oscillations may be based on data from only one "higher-order" sensor, for example the uppermost sensor in the diagram. However, if that sensor is delivering credible but erroneous data for whatever reason (as indicated by the warning sign), the oscillation detection and evaluation stages 72, 73 cannot identify any problems in the received data, and by not reporting an error at its output 73out, i.e. by implicitly or explicitly reporting an "all clear", the prior art monitoring arrangement 7 will indicate that all is satisfactory. This means that a potential fault - which could be derived from the sensor data if it were generating data correctly - may remain undetected until catastrophic damage occurs. The wind turbine controller of a wind turbine deploying such a monitoring arrangement 7 cannot assume that its output 73out is accurate.

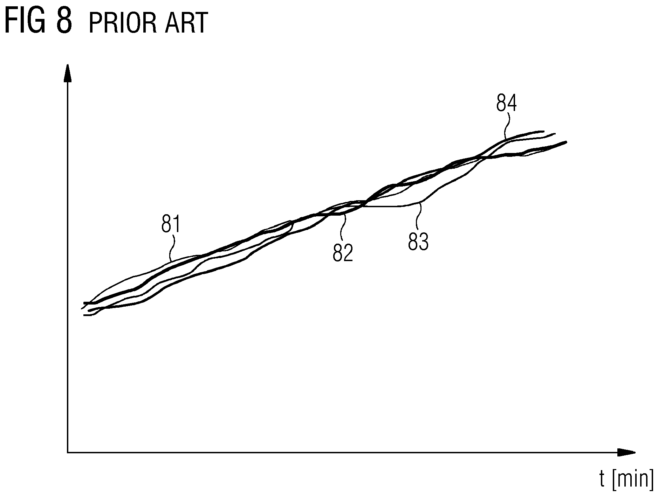

Figure 8 illustrates a prior art approach of interpreting sensor data collected in the monitoring arrangement of Figure 7. The diagram shows four curves 81, 82, 83, 84 each representing the moving average of the rpm measurements delivered by the sensors S of Figure 7. The rpm measurements may look similar to the curves illustrated in Figure 3, with the faulty sensor delivering erroneous rpm measurements. The moving averages of the sensors can be useful to the wind turbine controller for various control procedures. However, this information effectively conceals a faulty sensor, since the moving averages can be highly similar as shown here, making it impossible to identify a faulty sensor from the curves 81, 82, 83, 84.

Although the present invention has been disclosed in the form of preferred embodiments and variations thereon, it will be understood that numerous additional modifications and variations could be made thereto without departing from the scope of the invention. For example, the monitoring arrangement can be realised as part of the wind turbine controller, or can be a separate module configured to report to the wind turbine controller.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A method of performing oscillation monitoring in a drivetrain (10), which method comprises the steps of
- obtaining sensor outputs (D) from a plurality of sensors (S) arranged to measure the rotational speed of each of a number of drivetrain components (11, 12, 13, 14);
- screening the sensor outputs (D) to detect an erroneous sensor output (D); and,
- under exclusion of any erroneous sensor outputs (D), processing one or more of the remaining sensor outputs (D) to identify oscillation in a drivetrain component (11, 12, 13, 14).

2. A method according to the preceding claim, wherein a sensor output (D) is deemed erroneous when a degree of similarity (Δ_{σ1}) between that sensor output (D) and the remaining sensor outputs (D) is less than a predetermined threshold (Δ_{OK}).

3. A method according to the preceding claim, wherein a degree of similarity (Δ_{σ1}) comprises the difference between the moving standard deviation (σ1, σ2, σ3, σ4) of a sensor output and the collective moving standard deviation of the remaining sensor outputs (D).

4. A method according to any of the preceding method claims, wherein screening the sensor outputs (D) comprises a step of selecting a non-erroneous sensor output (D) for use in a subsequent processing stage.

5. A method according to the preceding claim, wherein the non-erroneous sensor output (D) is selected according to a predetermined sensor hierarchy.

6. A drivetrain oscillation monitor (2) comprising
- a means of obtaining sensor outputs (D) from a plurality of sensors (S), each sensor (S) arranged to measure the rotational speed of a rotating drivetrain component (11, 12, 13, 14);
- a processing stage (22, 23) adapted to identify oscillation in a drivetrain component (11, 12, 13, 14) on the basis of one or more sensor outputs (D); and
- a screening stage (20, 21) adapted to detect an erroneous sensor output (D) and to exclude any such erroneous sensor output (D) from use in the processing module (22, 23) .

7. A drivetrain oscillation monitor according to the preceding claim, wherein the screening stage comprises a sensor status evaluation module (20) adapted to establish the status (Sflag) of each sensor output (D).

8. A drivetrain oscillation monitor according to any of claims 6 to 7, wherein the screening stage comprises a selection stage (21, 21M) adapted to select the sensor output (D) of a non-erroneous sensor (S) only for use by the processing module (22, 23).

9. A drivetrain oscillation monitor according to the preceding claim, wherein the selection stage (21, 21M) deploys a predetermined sensor hierarchy.

10. A drivetrain oscillation monitor according to any of claims 6 to 9, wherein the processing module comprises an oscillation detection stage (22) and an oscillation evaluation stage (23).

11. A drivetrain oscillation monitor according to any of claims 6 to 10, comprising a sensor selection module (21) configured to identify an operational sensor (S).

12. A drivetrain oscillation monitor according to any of claims 6 to 11, configured to obtain sensor outputs (D) from at least three sensors (S).

13. A wind turbine (1) comprising a plurality of sensors (S), each sensor (S) arranged to measure the rotational speed of a drivetrain component (11, 12, 13, 14), and a drivetrain oscillation monitor (2) according to any of claims 6 to 12 to identify oscillation in a drivetrain component (11, 12, 13, 14) on the basis of one or more sensor outputs (D).

14. A wind turbine according to the preceding claim, wherein a sensor (S) is any of: an inductive sensor, an accelerometer, a rotary encoder, a hall-effect sensor.

15. A computer program product comprising a computer program that is directly loadable into a memory of a wind turbine controller of a wind turbine according to claim 13 or claim 14, and which comprises program elements for performing steps of the method according to any of claims 1 to 5 when the computer program is executed by the wind turbine controller.
